# EUROPÄISCHE PATENTSCHRIFT

(11) **EP 1 853 144 B1**
(45) Veröffentlichungstag und Bekanntmachung des Hinweises auf die Patenterteilung: **28.04.2010**
(21) Anmeldenummer: 06707384.1
(22) Anmeldetag: 02.03.2006
(51) Int. Cl.: A47J 36/34, A47F 10/06

(54) **TRAGRAHMEN FÜR SPEISENBEHÄLTER UND/ODER ZUBEHÖR**
FRAME FOR MEAL CONTAINER AND/OR ACCESSORIES
CADRE SUPPORT DESTINE A UN CONTENANT ALIMENTAIRE ET/OU DES ACCESSOIRES

(30) Priorität: 03.03.2005 DE 202005003534 U
(43) Veröffentlichungstag der Anmeldung: 14.11.2007
(73) Patentinhaber: Maier, Max, 71636 Ludwigsburg (DE)
(72) Erfinder: EBERHARD, Jürgen, 71726 Benningen (DE)
(74) Vertreter: Menges, Rolf
(86) Internationale Anmeldenummer: PCT/EP2006/001913
(87) Internationale Veröffentlichungsnummer: WO 2006/092302

(56) Entgegenhaltungen:
- DE-A1- 19 757 004
- DE-U1- 29 603 625
- DE-U1- 29 706 533
- US-A- 5 819 640

## Beschreibung

Die Erfindung betrifft einen Tragrahmen der im Oberbegriff des unabhängigen Patentanspruchs 1 angegebenen Art.

Ein solcher Tragrahmen ist aus der DE 296 03 625 U1 bekannt. Dieser bekannte Tragrahmen ist speziell als ein Haltemittel für eine kugelähnlich gewölbte Wok-Pfanne ausgebildet, um diese auf einem Induktionsherd mit ebenem Kochfeld verwenden zu können. Der Tragrahmen ist als ein unten offener kastenartiger Aufsatz ausgebildet, der in seiner oberen Decke eine kreisrunde Öffnung aufweist, in welche die Wok-Pfanne eingesetzt wird, so dass sie am Rand der Öffnung aufliegt. Der Durchmesser der Öffnung ist in Ansehung der Höhe der Decke über dem Kochfeld und des Wok-Wölbungsradius so bemessen, dass der tiefste Punkt der Wok-Pfanne das Kochfeld berührt oder gerade nicht berührt. Der bekannte Tragrahmen liegt mit an der Innenseite der Seitenwände angebrachten Vorsprüngen oder Stützen auf dem Kochfeld des Induktionsherdes auf. Für einen anderen Speisenbehälter als eine Wok-Pfanne ist der bekannte Tragrahmen nicht vorgesehen.

Aus der EP 0 635 225 B2 ist eine Warmspeisenausgabe bekannt, die ein Gehäuse hat, das doppelwandig ist und einen Ausschnitt hat zum Aufnehmen von wenigstens einem Speisenbehälter für warmzuhaltende Speisen und eine Heizeinrichtung zum Beheizen des Speisenbehälters, die aus wenigstens einer elektrischen Heizplatte besteht. Der Speisenbehälter hat einen seitlich vorstehenden Auflagerand, mit dem er auf dem Gehäuse aufliegt. Die Heizeinrichtung ist in unterschiedlichen Höhen in das Gehäuse einschiebbar, damit der Abstand zwischen der Heizeinrichtung und dem Speisenbehälter bei unterschiedlich tiefen Speisenbehältern stets auf den optimalen Wert gebracht werden kann.

Aus der DE 197 57 004 C2 ist ein Geräteträger als Teil eines Kochzentrums mit Warm- und/oder Kaltausgabe bekannt. Der Geräteträger kann aus Geräteeinheiten aufgebaut sein, von denen eine in Fig. 7 dieser DE-Patentschrift dargestellt ist. Ein solcher Geräteträger ist ebenso wie das Gehäuse der weiter oben beschriebenen bekannten Warmausgabe doppelwandig und außerdem ein sperriges und voluminöses Gebilde, das bei Nichtgebrauch nicht ohne weiteres gelagert oder aufbewahrt werden kann, auch wenn es nur aus einer einzelnen Geräteträgereinheit besteht. Weiter ist ein solcher Geräteträger oder auch nur eine Geräteträgereinheit nicht leicht zu reinigen. Es ist klar, dass eine Warmausgabe oder ein Kochzentrum der vorgenannten Art nicht ohne weiteres einfacher und weniger robust gestaltet werden können, dass sie aber auch für den Einsatz im privaten Bereich oder in der Gastronomie, wenn nur eine einzelne Heizeinrichtung benötigt wird, überdimensioniert sind. Selbst eine einzelne Geräteträgereinheit mit dem vorstehend geschilderten Aufbau ist dafür zu aufwendig.

Aus der US 58 19 640 A ist ein Warmhaltegerät bekannt, das vier Seitenwände und einen Boden aufweist. Es hat eine obere Öffnung zur Aufnahme einer Pfanne oder eines Tabletts und eine große Zugangsöffnung in einer seiner vier Seitenwände. In das Warmhaltegerät ist ein Drahtrahmen hineinstellbar, der zwei Petroleumbrenner zum Warmhalten oder Erhitzen des Inhalts in der Pfanne aufnehmen kann. In der oberen Öffnung kann das Warmhaltegerät auch mehrere Pfannen übereinander aufnehmen. Die Verwendung eines thermischen Geräts wie einer elektrischen Heizplatte od. dgl. ist bei dem bekannten Warmhaltegerät nicht vorgesehen.

Aus der DE 35 42 954 A1 ist ein Behälter zum Warmhalten von Speisen bekannt. Dieser Behälter ist wie ein übliches Bain-Marie aufgebaut, in welchem mit Hilfe eines Wasserbades, das in einem Außengefäß enthalten ist, der Inhalt eines in das Außengefäß eingesetzten Einsatzgefäßes warmgehalten werden kann. Zur Beheizung des Wasserbades ist bei dem bekannten Behälter unter dem Boden desselben eine Elektro-Heizplatte fest angebracht.

Aufgabe der Erfindung ist es, einen Tragrahmen der im Oberbegriff des Patentanspruchs 1 angegeben Art so zu gestalten, dass er statt für eine Wok-Pfanne für andere Speisenbehälter geeignet ist und dabei leicht handhabbar bleibt und einen einfachen Aufbau behält.

Diese Aufgabe ist erfindungsgemäß durch einen Tragrahmen mit den im kennzeichnenden Teil des Patentanspruchs 1 angegebenen Merkmalen gelöst.

Der erfindungsgemäße Tragrahmen dient als Aufsatz für ein thermisches Gerät, das wie üblich als ein Tischgerät ausgebildet ist, aber in die Lage versetzt wird, einen oder mehrere gefüllte GN-Speisenbehälter aufnehmen zu können. Der Tragrahmen selbst hat einen einfachen Aufbau, weil er lediglich das Gewicht von dem (den) gefüllten GN-Speisenbehälter(n) aufzunehmen hat. Der Tragrahmen kann eine einwandige Blechkonstruktion einfachster Art sein, die ein geringes Gewicht hat und in jeder Geschirrspülmaschine gereinigt werden kann.

Da bei dem Tragrahmen nach der Erfindung von den vier Seitenwänden eine vordere Seitenwand sich nur über einen Teil seiner Höhe erstreckt, kann auch in den unteren Bereich des Tragrahmens bei Bedarf ein flacher GN-Speisenbehälter eingeschoben werden. Beispielsweise kann dieser flache GN-Speisenbehälter ebenso wie der Tragrahmen auf einem Tisch ruhen. Zusätzlich kann dabei in die obere Öffnung des Tragrahmens ein GN-Speisenbehälter oder ein GN-Schneidbrett eingesetzt werden. Zweckmäßig wird ein GN-Schneidbrett eingesetzt, das sich nur über die halbe Länge des Tragrahmens erstreckt. Unten kann eine flache GN-Schale oder können zwei derartige Schalen eingeschoben werden. Von einem oben mittig angeordneten GN-Schneidbrett der Größe 1/2 kann beim Schneiden in den (die) darunter eingeschobenen GN-Speisenbehälter gearbeitet werden. Zweckmäßig werden unten zwei GN-Speisenbehälter der Größe 1/2 eingeschoben, so dass bei mittig angeordnetem GN-Schneidbrett nach dem Prinzip gut/schlecht in den einen oder anderen Speisenbehälter gearbeitet werden kann.

Da der Tragrahmen nach der Erfindung auf einem thermischen Gerät mit an zwei einander gegenüberliegenden Längsseitenwänden des Tragrahmens vorgesehenen Auflageschienen abstützbar ist, braucht für das Abstützen des Tragrahmens auf dem thermischen Gerät lediglich der gegenseitige Abstand dieser Auflageschienen im Hinblick auf die entsprechende Abmessung des thermischen Gerätes eingehalten zu werden. Die Auflageschienen lassen sich auf einfache Weise an den Innenseiten von zwei einander gegenüberliegenden Längswänden des Tragrahmens befestigen.

Da weiter die Auflageschienen des Tragrahmens nach der Erfindung als Auflagen für einen GN-Speisenbehälter ausgebildet sind, braucht lediglich der gegenseitige Auflagenabstand gemäß EN 631-2 eingehalten zu werden, wenn GN-Speisenbehälter auch auf den Auflageschienen in den Tragrahmen einschoben werden sollen, obgleich der Tragrahmen die Auflageschienen eigentlich zur Abstützung auf dem thermischen Gerät aufweist. Statt eines GN-Speisenbehälters kann auch das thermische Gerät in den Tragrahmen eingeschoben werden, der in dem Fall auf dem Tisch ruht.

Vorteilhafte Ausgestaltungen der Erfindung bilden die Gegenstände der abhängigen Ansprüche.

Wenn in einer Ausgestaltung des Tragrahmens nach der Erfindung die Auflageschienen punktförmige Verbindungen mit der sie tragenden Seitenwand des Tragrahmens haben, lässt sich eine Wärmeübertragung durch Wärmeleitung von dem thermischen Gerät auf den Tragrahmen wesentlich verringern. Zusätzlich können sich die Auflageschienen über gesonderte, nichtwärmeleitende Füβe auf dem thermischen Gerät abstützen, so dass eine Wärmeübertragung auf den Tragrahmen weiter verringert wird.

Wenn in einer weiteren Ausgestaltung des Tragrahmens nach der Erfindung die Auflageschienen im Querschnitt U-förmig sind, kann einer der U-Schenkel für die Abstützung auf dem thermischen Gerät und der andere U-Schenkel als Auflage für einen oder mehrere weitere GN-Speisenbehälter eingesetzt werden.

Wenn in einer weiteren Ausgestaltung des Tragrahmens nach der Erfindung einer der U-Schenkel der Auflageschienen nach innen hin verlängert und nach oben hin abgewinkelt ist, lässt sich auch eine Strahlungswärmeübertragung von dem thermischen Gerät her auf den Tragrahmen weiter verringern.

Wenn in einer weiteren Ausgestaltung des Tragrahmens nach der Erfindung der Tragrahmen zur Aufnahme eines GN-Speisenbehälters der Größe 1/1 bemessen ist, bietet sich die Möglichkeit, sowohl in die obere Öffnung als auch über die Auflageschienen im Inneren des Tragrahmens mehrere Speisenbehälter einzusetzen, deren Größe kleiner als 1/1 ist.

Wenn in einer weiteren Ausgestaltung des Tragrahmens nach der Erfindung die Höhe des Rahmens auf die Höhe eines GN-Speisenbehälters mit dem GN-Maß 100 mm abgestimmt ist, bietet der Rahmen Platz, um in zwei Ebenen flachere GN-Speisenbehälter aufzunehmen.

Wenn in einer weiteren Ausgestaltung des Tragrahmens nach der Erfindung die Auflageschienen sich bis in eine Höhe erstrecken, die auf die Höhe eines Speisenbehälters mit dem GN-Maß 65 mm abgestimmt ist, lassen sich im Inneren des Tragrahmens Speisenbehälter mit einer Höhe von 65, 40 oder 20 mm einsetzen.

Ausführungsbeispiele der Erfindung werden im Folgenden unter Bezugnahme auf die Zeichnungen näher beschrieben. Es zeigen
- Fig. 1: eine zur Erläuterung der Erfindung dienende perspektivische Darstellung eines Tragrahmens,
- Fig. 2: in perspektivischer Darstellung den Tragrahmen nach Fig. 1 in Kombination mit einem thermischen Gerät und mit einem GN-Speisenbehälter der Größe 1/1,
- Fig. 3: in perspektivischer Darstellung eine Ausführungsform eines Tragrahmens nach der Erfindung in Kombination mit einem thermischen Gerät, wobei ein in den Tragrahmen einzusetzender GN-Speisenbehälter der Größe 1/1 der Übersichtlichkeit halber weggelassen worden ist,
- Fig. 4: als Schnittansicht eine Einzelheit der Verbindung zwischen Tragrahmen, Auflageschiene und thermischem Gerät und
- Fig. 5: als eine weitere Einzelheit eine Schnittdarstellung in einer gleichen Ansicht wie in Fig. 4, aber mit einer modifizierten Auflageschiene.

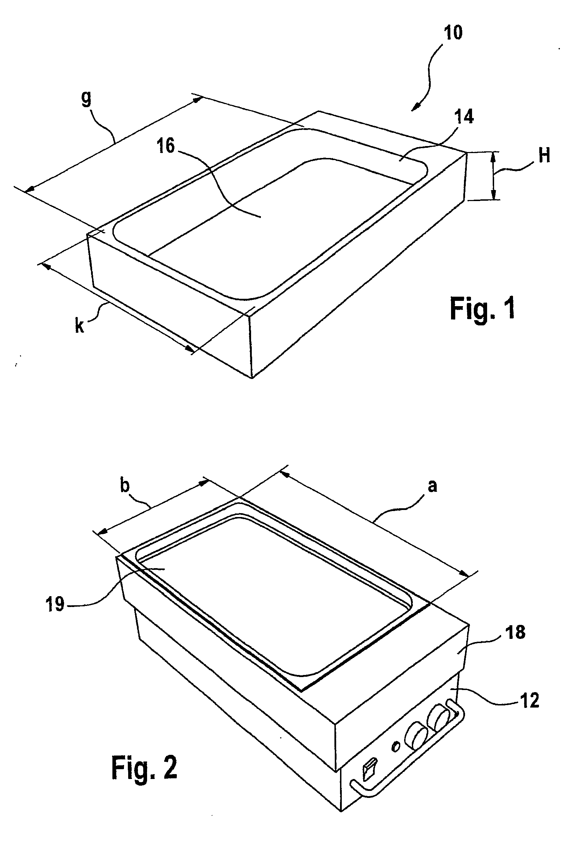

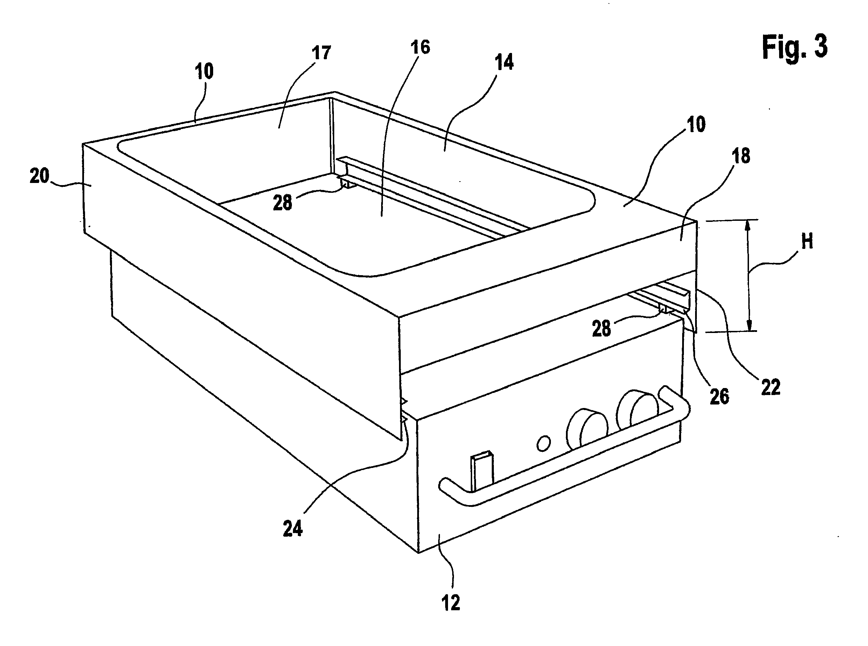

Fig. 1 zeigt eine zur Erläuterung der Erfindung dienende perspektivische Darstellung eines insgesamt mit 10 bezeichneten Tragrahmens. Fig. 2 zeigt in perspektivischer Darstellung den Tragrahmen 10 nach Fig. 1 aufgesetzt auf ein thermisches Gerät 12. Der Tragrahmen hat eine obere Öffnung 14 und eine untere Öffnung 16. Die obere Öffnung 14 dient zur Aufnahme von GN(Gastro-Norm)-Speisenbehältern, d.h. Speisenbehältern nach der europäischen Norm EN 631 und/oder von GN-Zubehör, bei dem es sich um Backbleche, Roste, Schneidbretter, Körbe für Geschirr und Glas, Tabletts oder Schneidwerkzeuge handeln kann. In Fig. 2 ist als Beispiel eines solchen GN-Speisenbehälters ein Speisenbehälter 19 der Größe 1/1 angeordnet in der oberen Öffnung 14 des Tragrahmens 10 dargestellt. Der GN-Speisenbehälter 19 der Größe 1/1 hat eine Länge a von 530 mm und eine Breite b von 325 mm und eine Höhe h von 20, 40, 65, 150 oder 200 mm. Die obere Öffnung 14 hat nach Länge und Breite die GN-Maße g bzw. k. Für den Einsatz eines GN-Behälters der Größe 1/1 betragen diese Maße 510 bzw. 305 mm. Der Tragrahmen 10 weist eine wenigstens der Höhe h des aufzunehmenden Speisenbehälters 19 entsprechende Höhe H auf. Im Bereich der unteren Öffnung 16 ist der Tragrahmen 10 so bemessen, dass er als abnehmbarer Aufsatz auf das thermische Gerät 12 aufsetzbar ist, wie es in den Fig. 2 und 3 zu erkennen ist. Dafür hat er im Bereich der unteren Öffnung 16 eine Einrichtung zum Abstützen auf dem thermischen Gerät 12.

Bei einer in Fig. 3 dargestellten Ausführungsform des Tragrahmens 10 nach der Erfindung erstreckt sich von vier Seitenwänden 17, 18, 20, 22 des Tragrahmens die an der Stirnseite (Bedienseite) gelegene vordere Seitenwand 18 nur über einen Teil seiner Höhe H. Der Tragrahmen 10 hat als Abstützeinrichtung zum Abstützen auf dem thermischen Gerät 12 an den Innenseiten der beiden einander gegenüberliegenden Längsseitenwände 20, 22 des Tragrahmens vorgesehene Vorsprünge, die in dem in Fig. 3 dargestellten Ausführungsbeispiel aus im Querschnitt U-förmigen Auflageschienen 24, 26 bestehen, welche sich mit ihren unteren U-Schenkeln über nichtwärmeleitende Füße 28, von denen zwei in Fig. 3 sichtbar sind, auf der Oberseite des thermischen Gerätes 12 abstützen.

Die unteren und die oberen U-Schenkel der Auflageschienen 24, 26 sind darüber hinaus als Auflagen für einen GN-Speisenbehälter (nicht dargestellt) ausgebildet, der von der Bedienseite aus in den Tragrahmen 10 eingeschoben werden kann. Die Auflageschienen 24, 26 haben punktförmige Verbindungen 30 mit der sie tragenden Wand 20 bzw. 22. Statt eines schalenförmigen GN-Speisenbehälters kann auch ein flaches thermisches Gerät 12,das wesentlich flacher als das in Fig. 3 gezeigte thermische Gerät 12 ausgebildet ist und an seiner Oberseite auf beiden Längsseiten nach außen vorstehende Ränder aufweist, auf den oberen oder unteren U-Schenkeln der Auflageschienen 24, 26 in den Tragrahmen 10 eingeschoben werden. In diesem Fall wird dann oben auch nur ein flacher GN-Speisenbehälter 19 in die obere Öffnung 14 des Tragrahmens 10 eingesetzt.

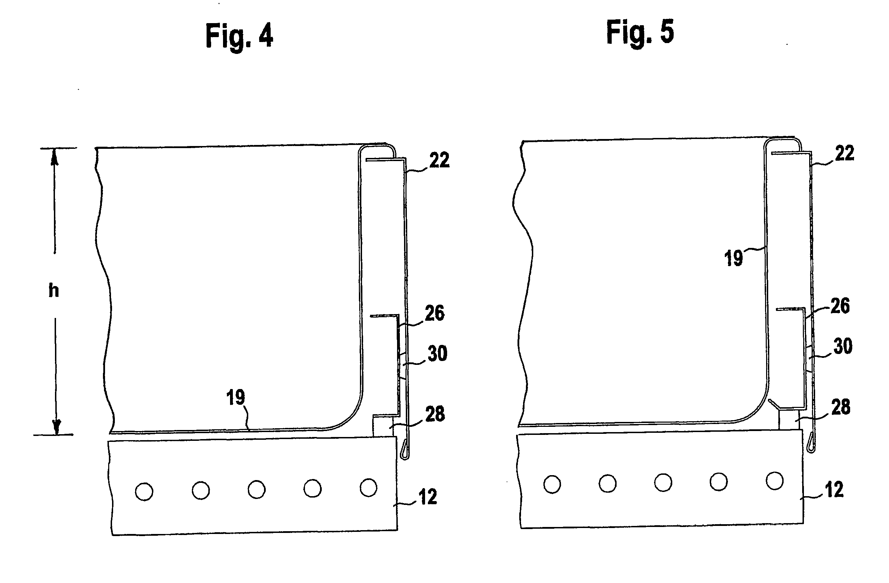

In Fig. 4 ist als Einzelheit im Schnitt die Verbindung der Auflageschiene 26 mit der Seitenwand 22 durch die punktförmige Verbindung 30 dargestellt. Es ist zu erkennen, dass einer der U-Schenkel der Auflageschiene 26 (für die Auflageschiene 28 gilt das Gleiche) in der Ausführungsform nach Fig. 5 nach innen hin verlängert und nach oben hin abgewinkelt ist. Das dient zur Verhinderung einer Strahlungswärmeübertragung von dem thermischen Gerät 12 auf den Tragrahmen 10.

Der Tragrahmen 10 ist zur Aufnahme des GN-Speisenbehälters 19 der Größe 1/1 bemessen. Die Höhe H des Tragrahmens 10 ist auf die Höhe h des Speisenbehälters 19 abgestimmt, der selbst eine Höhe h mit dem GN-Maß 100 mm hat. Die Auflageschienen 24, 26 erstrecken sich bis in eine Höhe, die auf die Höhe h eines Speisenbehälters 19 mit einem GN-Maß von 65 mm abgestimmt ist.

Statt der Auflageschienen 24, 26 können an den Längsseitenwänden 20, 22 auch nach innen in den Tragrahmen 10 hinein vorstehende Längssicken (nicht dargestellt) ausgebildet sein.

## Patentansprüche

1. Tragrahmen mit einer oberen Öffnung (14) für die Aufnahme von wenigstens einem Speisenbehälter (19) und mit einer unteren Öffnung (16), wobei der Tragrahmen vier Seitenwände (17, 18, 20, 22) hat und im Bereich der unteren Öffnung (16) als eine Einrichtung (24, 26, 28) zu seiner Abstützung als abnehmbarer Aufsatz auf einem thermischen Gerät (12) Vorsprünge aufweist,
**dadurch gekennzeichnet, dass** die obere Öffnung (14) zur Aufnahme von GN(Gastro-Norm)-Speisenbehältern (19) und/oder -Zubehör nach Länge und Breite GN-Maße (g, k) aufweist,
dass der Tragrahmen (10) eine wenigstens der Höhe (h) des aufzunehmenden Speisenbehälters (19) entsprechende Höhe (H) aufweist,
dass von den vier Seitenwänden (17, 18, 20, 22) eine vordere Seitenwand (18) sich nur über einen Teil der Höhe (H) des Tragrahmens erstreckt und
dass der Tragrahmen (10) als Vorsprünge zum Abstützen auf einem thermischen Gerät (12) an zwei einander gegenüberliegenden Längsseitenwänden (20, 22) des Tragrahmens (10) vorgesehene Auflageschienen (24, 26) aufweist, die als Auflagen für einen GN-Speisenbehälter (19) ausgebildet sind.

2. Tragrahmen nach Anspruch 1, **dadurch gekennzeichnet, dass** die Auflageschienen (24, 26) punktförmige Verbindungen (30) mit der sie tragenden Seitenwand (20, 22) des Tragrahmens (10) haben.

3. Tragrahmen nach Anspruch 1 oder 2, **dadurch gekennzeichnet, dass** die Auflageschienen (24, 26) im Querschnitt U-förmig sind.

4. Tragrahmen nach Anspruch 3, **dadurch gekennzeichnet, dass** einer der U-Schenkel der Auflageschienen (24, 26) nach innen hin verlängert und nach oben hin abgewinkelt ist.

5. Tragrahmen nach einem der Ansprüche 1 bis 4, **dadurch gekennzeichnet, dass** der Tragrahmen (10) zur Aufnahme eines GN-Speisenbehälters (19) der Größe 1/1 bemessen ist.

6. Tragrahmen nach einem der Ansprüche 1 bis 5, **dadurch gekennzeichnet, dass** die Höhe des Tragrahmens (10) auf die Höhe (h) eines GN-Speisenbehälters (19) mit dem GN-Maß 100 mm abgestimmt ist.

7. Tragrahmen nach einem der Ansprüche 1 bis 4, **dadurch gekennzeichnet, dass** sich die Auflageschienen (24, 26) bis in eine Höhe erstrecken, die auf die Höhe (h) eines Speisenbehälters mit dem GN-Maß 65 mg abgestimmt ist.

## Claims

1. A supporting frame comprising an upper opening (14) for receiving at least one catering container (19) and a lower opening (16), the supporting frame having four side walls (17,18,20,22) and comprising in the vicinity of the lower opening (16) projections as means (24,26,28) for its support as a removable top on a thermal device (12),
**characterised in that** upper opening (14) has GN measurements in length (g) and width (k) for receiving GN (Gastro-Norm) catering containers (19) and/or accessories,
that supporting frame (10) corresponds in its height (H) at least to the height (h) of the catering container to be received, that of the four side walls (17,18,20,22) a front side wall (18) extends only part way over the height (H) of the supporting frame, and
that the supporting frame (10) has as projections for supporting on a thermal device (12) on two opposite longitudinal side walls (20,22) of supporting frame (10) supporting bars (24,26) adapted to receive a GN catering container (19).

2. The supporting frame according to claim 1, **characterised in that** the supporting bars (24,26) have punctual connections (30) with the side walls (20,22) of the supporting frame (10) bearing their load.

3. The supporting frame according to claim 1 or 2, **characterised in that** the supporting bars (24,26) have a channel-shaped cross section.

4. The supporting frame according to claim 3, **characterised in that** one of the legs of the channel-shape of the supporting bars (24,26) is extended inwards and bent upwards.

5. The supporting frame according to any one of the claims 1 to 4, **characterised in that** supporting frame (10) is dimensioned to receive a GN catering container (19) of the size 1/1.

6. The supporting frame according to any one of the claims 1 to 5, **characterised in that** the height of supporting frame (10) is adapted to the height (h) of a GN catering container (19) having the GN dimension 100 mm.

7. The supporting frame according to any one of the claims 1 to 4, **characterised in that** the supporting bars (24,26) extend to a height which corresponds to height (h) of a catering container having the GN dimension 65 mm.

## Revendications

1. Cadre support, comportant une ouverture supérieure (14), destinée à recevoir au moins un bac alimentaire (19), et comportant une ouverture inférieure (16), ledit cadre support ayant quatre parois latérales (17, 18, 20, 22) et, dans la zone de son ouverture inférieure (16), des saillies formant un dispositif (24, 26, 28) pour supporter ledit cadre support en tant qu'élément de pose amovible sur un appareil thermique (12),
**caractérisé en ce que** l'ouverture supérieure (14),
destinée à recevoir des bacs alimentaires GN (gastronorme) (19) et/ou des accessoires GN, possède en longueur et largeur des dimensions GN (g, k),
**en ce que** le cadre support (10) a une hauteur (H) correspondant au moins à la hauteur (h) du bac alimentaire (19) à recevoir,
**en ce que** parmi les quatre parois latérales (17, 18, 20, 22), une paroi latérale avant (18) s'étend seulement sur une partie de la hauteur (H) du cadre support, et
**en ce que** le cadre support (10) comporte des rails de support (24, 26) formant des saillies pour la pose sur un appareil thermique (12), qui sont prévus sur deux parois longitudinales (20, 22) du cadre support (10) se faisant face et qui sont réalisés sous la forme de supports pour un bac alimentaire GN (19).

2. Cadre support selon la revendication 1, **caractérisé en ce que** les rails de support (24, 26) ont des assemblages (30) par points avec la paroi latérale (20, 22), qui les portent, du cadre support (10).

3. Cadre support selon la revendication 1 ou 2, **caractérisé en ce que** les rails de support (24, 26) ont une section en forme de U.

4. Cadre support selon la revendication 3, **caractérisé en ce que** l'une des branches du U des rails de support (24, 26) est prolongée vers l'intérieur et est pliée vers le haut.

5. Cadre support selon l'une quelconque des revendications 1 à 4, **caractérisé en ce que** le cadre support (10) est dimensionné pour recevoir un bac alimentaire GN (19) de taille 1/1.

6. Cadre support selon l'une quelconque des revendications 1 à 5, **caractérisé en ce que** la hauteur du cadre support (10) est ajustée à la hauteur (h) d'un bac alimentaire GN (19) avec la cote GN 100 mm.

7. Cadre support selon l'une quelconque des revendications 1 à 4, **caractérisé en ce que** les rails de support (24, 26) s'étendent jusqu'à une hauteur qui est ajustée à la hauteur (h) d'un bac alimentaire avec la cote GN 65 mm.
